(19) Europäisches Patentamt
European Patent Office
Office européen des brevets

(11) Veröffentlichungsnummer: **0 483 485 A1**

(12) **EUROPÄISCHE PATENTANMELDUNG**

(21) Anmeldenummer: **91114800.5**

(51) Int. Cl.5: **C08F 251/00**, C08F 2/32

(22) Anmeldetag: **03.09.91**

(30) Priorität: **02.11.90 DE 4034882**

(43) Veröffentlichungstag der Anmeldung: **06.05.92 Patentblatt 92/19**

(84) Benannte Vertragsstaaten: **AT BE CH DE ES FR GB IT LI NL SE**

(71) Anmelder: **STARCHEM GMBH**
**George-C.-Marshall-Strasse 210**
**W-4150 Krefeld 12(DE)**

(72) Erfinder: **Heidel, Klaus, Dr.**
**Veilchenstrasse 10**
**W-4370 Marl(DE)**
Erfinder: **Scholz-Weigl, Sigrid, Dr.**
**Kreuzstrasse 309**
**W-4370 Marl(DE)**

(54) **Verfahren zur Herstellung von feinteiligen, wasserquellbaren Polysaccharid-Pfropfpolymeren.**

(57) Polysaccharid-Pfropfpolymere können durch halbkontinuierliche Umkehrphasen-Suspensionspolymerisation, Teilentwässerung und Vernetzung hergestellt werden.

Während und nach der Suspensionspolymerisation, bei der man eine wäßrige Lösung einer zumindest teilneutralisierten, olefinisch ungesättigten Carbonsäure zu einer Suspension eines Polysaccharids in einem unpolaren organischen Lösemittel gibt, wird nun die Viskosität durch Zusatz von amphoteren Ammoniumverbindungen oder von quaternären Imidazoliniumsalzen erniedrigt.

EP 0 483 485 A1

Die Erfindung betrifft ein neues Verfahren zur Herstellung von feinteiligen, porösen und schnell wasserquellbaren Polysaccharid-Pfropfpolymeren. Diese Polymere werden durch halbkontinuierliche Umkehrphasen-Suspensionspolymerisation, Teilentwässerung und Nachvernetzung hergestellt.

Im besonderen betrifft die Erfindung eine Suspensionspolymerisation, bei der zu einer Suspension von 5 bis 40 Teilen Polysaccharid und 0 bis 2 Teilen Polymerisationsinitiator in einem unpolaren organischen Lösemittel, das eine Dispergiermittelmischung aus 50 bis 100 Gewichtsprozent nichtionischem Tensid mit einem Hydrophil-Lipophil-Gleichgewicht (HLB-Wert) von 0,5 bis 10 und 0 bis 50 Gewichtsprozent nichtionischem Tensid mit einem HLB-Wert von 10,5 bis 20 enthält, eine wäßrige Lösung bei 40 bis 100 °C in 0,5 bis 5 Stunden kontinuierlich zugegeben wird. Dabei enthält diese wäßrige Lösung 60 bis 95 Teile einer zu 50 bis 100 % neutralisierten, olefinisch ungesättigten Carbonsäure, 0 bis 50 Teile weitere, olefinisch ungesättigte Monomere, 0 bis 2 Teile Quervernetzungsmittel und 0,005 bis 5 Teile Polymerisationsinitiator.

Wasserabsorbierende Polymere finden vielfältige Verwendung auf dem Sanitär- und Hygienesektor als Wasserabsorptionsmittel in Papierwindeln und -tüchern, als Tampons, Krankenunterlagen, Elektrolytverdikkern in Trockenbatterien, als Feuchthaltemittel oder Wasserspeicher in der Landwirtschaft und als Trocknungsmittel.

Geeignete Polymere sind derivatisierte, meist mit wasserlöslichen Vinylmonomeren gepfropfte Polysaccharide, wie Carboxymethylcellulose, hydrolysierte Stärke-Acrylnitril-Pfropfpolymere, Acrylsäure-Stärke-Pfropfpolymere, oder vollsynthetische, schwach vernetzte Polymere, wie teilvernetzte Polyacrylsäuresalze oder teilvernetzte Polymaleinsäurederivate.

Der Einbau von Stärke in wasserquellbare Pfropfpolymere ermöglicht im Vergleich zu vollsynthetischen Polymeren die Einstellung von besonderen Produkteigenschaften. So werden die Porosität der Polymerteilchen erhöht, die Absorptionsgeschwindigkeit gesteigert und die biologische Abbaubarkeit verbessert.

Die Herstellung der Pfropfpolymeren durch Direktpfropfung von Stärke mit Acrylat in wäßriger Lösung ist technisch nicht einfach. Um die für die Pfropfung erforderliche, möglichst homogene Verteilung von Stärke in der wäßrigen Monomerlösung zu erzielen, ist eine vorangehende Quellung der Stärke erforderlich. Hierdurch steigt die Viskosität der Monomerlösung erheblich, wobei man beim Einsatz von mehr als ca. 10 % Stärke eine pastenähnliche Konsistenz erhält.

Aus der DE-C 26 12 846 ist die Herstellung von wasserabsorbierenden Pfropfpolymeren durch Aufpfropfen von wasserlöslichen Monomeren, wie Acrylsäure, auf Stärke in Gegenwart eines Quervernetzungsmittels bekannt. Die Pfropfreaktion wird in wäßriger Lösung oder in wäßrig-alkoholischem Medium als sogenannte Fällungspolymerisation durchgeführt. Bei diesem Verfahren entstehen bei der Pfropfung in wäßriger Lösung gummiartige, nicht rührfähige Gele, aus denen erst durch Trocknung und Mahlung pulverförmige Endprodukte erhalten werden. Führt man dagegen die Pfropfung als Fällungspolymerisation in Gegenwart eines etwa 20fachen Überschusses an Alkohol als Fällmittel durch, entstehen feinteilige Produkte mit nur mäßigem Flüssigkeitsabsorptionsvermögen.

Nach der japanischen Patentschrift 80/139 408 kann durch Polymerisation von Acrylnitril in wäßrigem Medium in Gegenwart von Stärke ein Pfropfpolymer hergestellt werden, das anschließend hydrolysiert und vernetzt werden kann. Man erhält ein Pulver mit einer Wasserabsorptionsfähigkeit von 150 bis 180 ml/g.

Feinteilige wasserabsorbierende Polymere können durch Polymerisation von teilneutralisierter Acrylsäure in inverser Suspension, auch Umkehrphasen-Suspension genannt, hergestellt werden. Hierbei wird ein wasserlösliches Monomeres in Form einer wäßrigen Lösung in einem hydrophoben Medium in Gegenwart eines Dispergiermittels emulgiert und zu einem feinteiligen Endprodukt polymerisiert. Bei Anwesenheit eines Polysaccharids, wie Stärke, können dabei wasserlösliche oder wasserunlösliche, quellfähige Pfropfpolymere erhalten werden.

Eine Pfropfpolymerisation in inverser Suspension wird in der japanischen Patentschrift 80/161 813 angegeben. Dabei wird zunächst eine Mischung aus n-Hexan mit Sorbitanmonostearat, Stärke, Wasser, Acrylsäure, Natronlauge und wasserlöslichem Initiator angesetzt, bevor man durch Erwärmen die Polymerisation einleitet. Das Reaktionsprodukt neigt hier jedoch während der Polymerisation zur Verklumpung und fällt nicht feinteilig an.

Nach DE-C-28 40 010 können wasserlösliche Polysaccharid-Pfropfpolymere durch inverse Suspensionspolymerisation hergestellt werden, wobei man einen batch-Prozeß bevorzugt. Dabei wird zunächst ein Polysaccharid in Gegenwart eines grenzflächenaktiven Mittels in einem mit Wasser nicht mischbaren Lösemittel suspendiert. Anschließend wird eine wäßrige Monomerlösung, die überwiegend Acrylamid oder ein kationisches Monomer enthält und in geringen Mengen auch Acrylsäure aufweisen kann, bei Raumtemperatur zugegeben. Nach Zusatz eines Initiators wird erwärmt und polymerisiert. Die Feststoffgehalte, bezogen auf die wäßrige Polymerisationsmischung, liegen bei über 50 %.

Hier werden keine Vernetzungsmittel eingesetzt und keine wasserquellbaren gelartigen Polymere erhalten. Das angegebene ansatzweise Herstellverfahren führt zu Beginn der Polymerisation zu Temperaturspitzen, die bei großen Ansätzen schwer zu beherrschen sind.

In EP-B-0 083 022 wird Acrylsäure in Gegenwart von Stärke in wäßriger Lösung polymerisiert. Die Produkte können dann in einem inerten Lösemittel in Gegenwart von 0,01 bis 1,3 Teilen Wasser pro Teil Harz vernetzt werden.

Die Herstellung der Stärke-Pfropfpolymere erfolgt bei einem Feststoffgehalt von nur 20 %. Außerdem weisen diese Stärke-Pfropfpolymere - vernetzt oder unvernetzt - nur eine geringe Wasserabsorptionsfähigkeit auf.

Gemäß DE-A-38 01 633 werden Polysaccharid-Pfropfpolymere durch inverse Suspensionspolymerisation, Teilentwässerung und Vernetzung hergestellt. Die inverse Suspensionspolymerisation wird jedoch einstufig und diskontinuierlich durchgeführt, indem zunächst alle Reaktionskomponenten zusammengegeben werden und dann die Polymerisation durch Erhitzen in Gegenwart eines Initiators eingeleitet wird. Dabei wird zu Beginn der Polymerisation Wärme schlagartig frei. In technischen Produktionsreaktoren ist eine ausreichend schnelle Abfuhr der Polymerisationswärme oft nur schwer zu gewährleisten.

In der deutschen Patentanmeldung mit dem Aktenzeichen P 40 14 628.6 wird das Herstellverfahren für Polysaccharid-Pfropfpolymere weiter verbessert. Hier wird eine halbkontinuierliche Umkehrphasen-Suspensionspolymerisation durchgeführt,bei der zu einer Suspension eines Polysaccharids in einem organischen Lösemittel, das eine Dispergiermittelkombination enthält, eine wäßrige Lösung einer ungesättigten Carbonsäure und eines Initiators kontinuierlich zudosiert werden. Dieses Verfahren ermöglicht eine sichere Abfuhr der Polymerisatioswärme. Nach dem Ende des Zulaufs der wäßrigen Lösung und zu Beginn der hier folgenden azeotropen Teilentwässerung tritt jedoch eine Viskositätserhöhung auf, die mit einer erhöhten Energieaufnahme des Rührers verbunden ist. Die hohe Viskosität verstärkt bei den gequollenen Polymerteilchen die Neigung zum Verkleben.

Es bestand daher die Aufgabe, die Viskositätserhöhung bei der Herstellung von Polysaccharid-Pfropfpolymeren durch halbkontinuierliche Umkehrphasen-Suspensionspolymerisation zu vermindern oder vollständig zu unterdrücken.

Die Aufgabe wird erfindungsgemäß dadurch gelöst, daß man nach Zugabe von 75 bis 100 % der wäßrigen Lösung, die die olefinisch ungesättigte Carbonsäure enthält, als zusätzliches Dispergiermittel eine amphotere Ammoniumverbindung mit einem Alkylrest mit 6 bis 20 C-Atomen, ein quaternäres Imidazoliniumsalz mit einem Alkylrest mit 6 bis 20 C-Atomen oder Mischungen davon zugibt.

Diese Lösung ist überraschend, da eine Nachdosierung von nichtionischen Dispergiermitteln, wie sie in DE-A-38 23 729 bei der Umkehrphasen-Suspensionspolymerisation von Polyacrylaten erfolgt und wo sie zu einer verbesserten Teilchengrößenverteilung führt, bei der Umkehrphasen-Suspensionspolymerisation von Polysaccharid-Pfropfpolymeren weder eine bessere Teilchengrößenverteilung noch eine Viskositätserniedrigung bewirkt.

Da die durch die vorliegende Erfindung hergestellten Polysaccharid-Pfropfpolymeren als elektrisch negativ geladene Polyanionen anzusehen sind, überrascht außerdem, daß gerade die erfindungsgemäßen zusätzlichen Dispergiermittel wirksam sind. Vom Zusatz von amphoteren Ammoniumverbindungen mit einer positiven und negativen Ladung war kein Effekt, vom Zusatz von quaternären Imidazoliniumsalzen mit einer positiven Ladung war sogar der entgegengesetzte Effekt, also Agglomeration und erhöhte Viskosität, zu erwarten.

Die als zusätzliche Dispergiermittel geeigneten amphoteren Ammoniumverbindungen haben eine elektropositive und elektronegative Gruppe im gleichen Molekül. Sie sind also Betaine. Vorzugsweise verwendet man Alkylbetaine der Struktur I

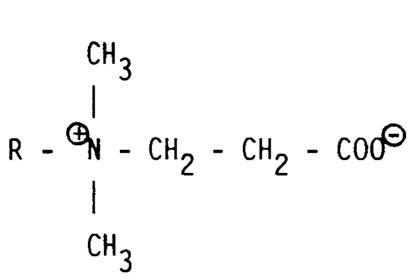

(I)

und Alkylsulfobetaine der Struktur II

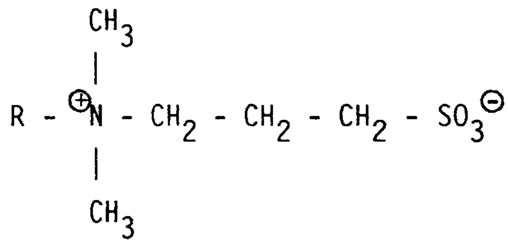

(II),

wobei R jeweils ein Alkylrest mit 6 bis 20 C-Atomen ist.

Beispiele für derartige Verbindungen sind Lauryldimethylammoniumpropylbetain, Palmityldimethylammoniumpropylbetain, Lauryldimethylammoniumpropylsulfobetain und Kokosfettdimethylammoniumpropylsulfobetain.

Geeignet sind ferner Distearylmethylammoniumpropylsulfobetain, N-Alkylaminopropylaminoessigsäure mit Betainstruktur

$R - {}^{\oplus}NH_2 - C_3H_6 - NH - CH_2 - COO^{\ominus}$ und

N-Alkylamidopropylbetain der Struktur

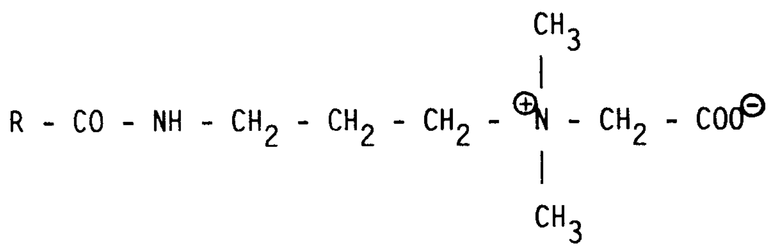

wobei R beispielsweise der Alkylrest der Kokosfettsäure sein kann. Kokosfettsäure ist nach Fieser und Fieser, Organische Chemie, 1965, 1208, eine Mischung aus Carbonsäuren mit 8 bis 18 C-Atomen, die zu 2/3 aus Laurin- und Myristinsäure besteht.

Eine weitere Gruppe von vorzugsweise eingesetzten zusätzlichen Dispergiermitteln sind quaternäre Imidazoliniumsalze mit der Betainstruktur III

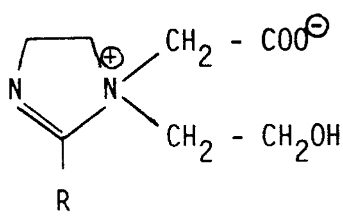

(III),

wobei R ein Alkylrest mit 6 bis 20 C-Atomen ist.

Ein Beispiel dafür ist das unter Einsatz von Kokosfettsäure hergestellte sogenannte Kokosimidazolin mit dem Hauptbestandteil

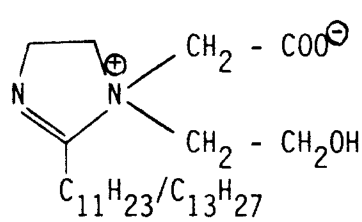

Bevorzugt werden außerdem auch quaternäre Imidazoliniumsalze der Struktur IV

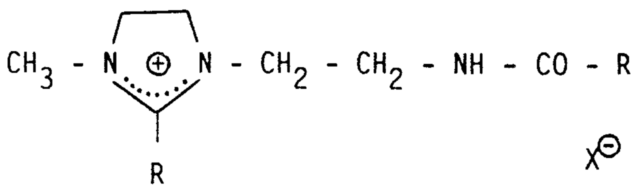

(IV),

worin R ein Alkyl mit 6 bis 20 C-Atomen und $X^{\ominus}$ vorzugsweise das Methylsulfat-Anion ist, eingesetzt.

Ein Beispiel dafür ist das bei Einsatz von Kokosfettsäure und Schwefelsäuremethylester als Hauptprodukt entstehende 1-Methyl-2-undecyl-3-undecylamidoethylimidazolinium-methylsulfat der folgenden Struktur

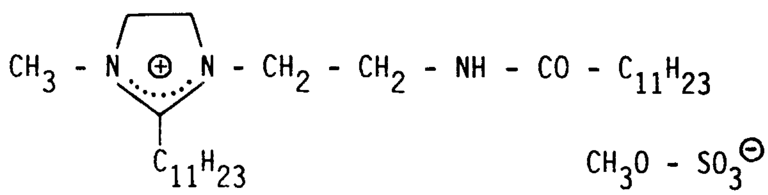

Das zusätzliche Dispergiermittel wird vorzugsweise in einer Menge von 0,2 bis 4 Gewichtsprozent, bezogen auf die olefinisch ungesättigte Carbonsäure, eingesetzt. Dabei werden Mengen von 0,4 bis 2 Gewichtsprozent besonders bevorzugt.

Die Gesamtmenge an zusätzlichem Dispergiermittel kann bereits zugegeben werden, wenn 75 % der olefinisch ungesättigten Carbonsäure zudosiert sind. Bis zum Ende der Carbonsäurezugabe können auch mehrere Teilmengen des zusätzlichen Dispergiermittels zugefügt werden. Vorzugsweise wird das zusätzliche Dispergiermittel jedoch nach dem Ende der Zugabe der olefinisch ungesättigten Carbonsäure oder nach dem Ende der Polymerisation zugegeben.

Für das erfindungsgemäße Verfahren geeignete Polysaccharide sind Stärken, Stärkederivate sowie Cellulosederivate. Dabei werden Stärken bevorzugt. Es können native Stärken aus Kartoffeln, Mais, Weizen, Reis oder Tapiocawurzeln, ferner Wachsmais oder High-Amylose-Stärke sowie deren Derivate, wie beispielsweise Stärkeether und -ester, eingesetzt werden. Besonders geeignet sind dünnkochende Stärken, die meist aus schwach hydrolytisch oder oxidativ abgebauten Stärken bestehen. Dabei werden Stärken mit einer Viskosität von 20 bis 25 000 mPa s, gemessen an einer 10%igen Paste bei 20 °C, bevorzugt, wobei Viskositäten von 40 bis 500 mPa s besonders bevorzugt werden.

Besonders bevorzugt werden 10 bis 25 Teile Stärke in dem organischen Lösemittel suspendiert.

Als Lösemittel für die organische Phase werden Kohlenwasserstoffe mit 6 bis 12 C-Atomen eingesetzt. Man kann aliphatische oder alicyclische Kohlenwasserstoffe, wie Cyclohexan, n-Hexan, $C_8$-Isoparaffine oder technische Benzinfraktionen, wie Normalbenzin, Ligroin, Testbenzin oder Solventnaphtha, mit einem Aromatenanteil bis zu 20 % und einem Siedepunkt im Bereich von 50 bis 200 °C verwenden.

Als nichtionisches Tensid mit einem HLB-Wert von 0,5 bis 10, das in dem organischen Lösemittel mindestens teilweise löslich sein soll, werden vorzugsweise lipophile Sorbitanester, wie z. B. Sorbitanmonolaurat, Sorbitanmonopalmitat oder Sorbitanmonooleat, eingesetzt. Außerdem sind auch Polyetherester, wie Polyethylenglykol(200)-monooleat, Polyethylenglykol(200)-monolaurat oder Polyethylenglykol(300)-oleat, gut geeignet.

Vorteilhaft ist die Mitverwendung eines überwiegend wasserlöslichen, nichtionischen Dispergiermittels mit einem HLB-Wert von 10,5 bis 20. Derartige Stoffe sind beispielsweise wasserlösliche Polethylenglykole mit einem Molekulargewicht von 200 bis 20 000, insbesondere von 400 bis 5 000, ferner Polyethylenglykolether aus einem aliphatischen einwertigen Alkohol mit 6 bis 20 C-Atomen und einem Polyethylenglykol mit 3 bis 30, insbesondere mit 4 bis 20 Ethylenoxideinheiten. Geeignet sind auch handelsübliche $C_{12}$-Fettalkoholpolyglykolether mit 7 bis 19 Ethylenoxideinheiten und einem HLB-Wert von 13 bis 18. Geeignet sind ferner Polyoxyethylen-Sorbitanfettsäureester, wie beispielsweise Polyoxyethylen-Sorbitanmonolaurat oder Polyoxyethylen-Sorbitanmonooleat.

In einer bevorzugten Ausführungsform besteht die Dispergiermittelmischung aus 50 bis 90 Gewichtsprozent nichtionischem Tensid mit einem HLB-Wert von 4 bis 10 und aus 10 bis 50 Gewichtsprozent nichtionischem Tensid mit einem HLB-Wert von 12 bis 18.

Der Anteil der Dispergiermittelmischung beträgt 1 bis 10 Gewichtsprozent, vorzugsweise 2 bis 5 Gewichtsprozent, bezogen auf das Gewicht der olefinisch ungesättigten Carbonsäure.

Die olefinisch ungesättigten Carbonsäuren weisen 3 bis 10 Kohlenstoffatome auf. Beispiele dafür sind Acrylsäure, Methacrylsäure, Crotonsäure, Tiglin- oder Angelicasäure. Vorzugsweise werden Acryl- und Methacrylsäure eingesetzt. Die Säuren können mit Alkali- oder Ammoniumhydroxidlösungen neutralisiert oder teilneutralisiert sein. Dabei wird vorzugsweise Natronlauge eingesetzt. Die wäßrigen Lösungen der ungesättigten Carbonsäuren weisen meist einen Feststoffgehalt im Bereich von 20 bis 45 % auf. Vorzugsweise werden 75 bis 90 Teile ungesättigte Carbonsäure eingesetzt.

Neben den ungesättigten Carbonsäuren können weitere, olefinisch ungesättigte Monomere, wie Acrylamid, Methacrylamid, Na-Salz von 2-Acrylamido-2-methylpropansulfonsäure, 2-Methacryloylethansulfonsäure, 2-Hydroxyethylacrylat, 2-Hydroxyethylmethacrylat, N.N-Dimethylaminoethylacrylat oder -methacrylat oder dessen quaternäre Ammoniumsalze in Form ihrer wäßrigen Lösung für die Polymerisation verwendet werden.

Die wäßrige Lösung, die zur Polymerisation der vorgelegten Polysaccharid-Suspension zugegeben wird, kann auch vollständig oder überwiegend wasserlösliche Quervernetzungsmittel enthalten. Geeignet sind Vinylverbindungen, wie N.N-Methylen-bis-acrylamid, Butandiol-1.4-di(meth)acrylat, Ethandioldi(meth)acrylat, Diallylmaleinat, Glycidyl(meth)acrylat, Allylmethacrylat, Polyethylenglykol(450)dimethacrylat, oder Polyepoxide, wie beispielsweise Ethylenglykoldiglycidylether, Polyethylenglykoldiglycidylether, Glycerintriglycidylether oder Diglycerintetraglycidylether.

Für die Pfropfpolymerisation werden übliche Polymerisationsinitiatoren verwendet. Geeignet sind beispielsweise Ammonium-, Natrium- oder Kaliumperoxodisulfat und entsprechende Peroxomonosulfate, Dibenzoylperoxid, Dilauroylperoxid, Di-2-ethylhexylperoxodicarbonat, Dicyclohexylperoxodicarbonat, tert.-Butylperpivalat, tert.-Butylperbenzoat, tert.-Butylpermaleinat, tert.-Butylhydroperoxid, Di-tert.-butylperoxid, Wasserstoffperoxid sowie Redox-Katalysatoren, wobei als reduzierende Komponente Ascorbinsäure, Natriummethylsulfinat, Dinatriumsulfit und Natriumhydrogensulfit in Betracht kommen. Außerdem eignen sich Azostarter, wie Azo-bis-isobutyronitril, 2.2-Azo-bis-(2-amidinopropan)-dihydrochlorid, 2.2'-Azo-bis-(4-cyanopentancarbonsäure) und 2-Carbamoylazoisobutyronitril.

Die Initiatoren können in der Lösung der ungesättigten Carbonsäure zu der Polysaccharid-Suspension zugegeben werden. Sie können aber auch als getrennte wäßrige Lösung zudosiert werden. Man kann auch einen Teil des Initiators in der organischen Phase vorlegen und einen anderen Teil mit der wäßrigen Lösung der ungesättigten Carbonsäure zuführen. Vorzugsweise werden 0,03 bis 0,5 Teile Initiator in der organischen Phase vorgelegt und 0,05 bis 1,5 Teile Initiator in einer wäßrigen Lösung zudosiert.

Kalium- und Ammoniumperoxodisulfat werden vorzugsweise eingesetzt.

Polysaccharid-Suspension und wäßrige Lösung können außerdem übliche Hilfs- und Zusatzstoffe, wie Entschäumer und Komplexierungsmittel, enthalten. So kann man zur Komplexierung von Eisenspuren beispielsweise Nitrilotriacetat, Ethylendiamintetraacetat oder Diethylentriaminpentaacetat zusetzen.

Die Polymerisation wird vorzugsweise bei 50 bis 75 °C durchgeführt.

Bei der Umkehrphasen-Suspensionspolymerisation wird eine wäßrige Polymermischung erhalten, die vorzugsweise einen Feststoffgehalt von 30 bis 50 %, bezogen auf die Summer aus Polymer und Wasser, aufweist.

Nach beendeter Polymerisation führt man eine Teilentwässerung durch, wobei man vorzugsweise einen Restwassergehalt von 5 bis 30 %, bezogen auf die Summe von Polymer und Wasser, einstellt. Die Teilentwässerung wird im allgemeinen bei 50 bis 100 °C durch azeotrope Destillation, bei der man auch Vakuum anlegen kann, durchgeführt. Dabei können übliche Entwässerungsapparaturen verwendet werden, bei denen die organische Phase zurückgeführt wird.

Nach der Teilentwässerung werden vorzugsweise 0,005 bis 5 Gewichtsprozent Quervernetzungsmittel, bezogen auf das Pfropfpolymer, zugesetzt. Vorzugsweise liegt der Gehalt bei 0,05 bis 0,5 Gewichtsprozent, wobei man Epoxide bevorzugt. Dabei sind unter anderem Polyglycidylether, wie beispielsweise Ethylenglykoldiglycidylether, Polyethylenglykoldiglycidylether, Glycerintriglycidylether und Diglycerintetraglycidylether, geeignet. Außerdem sind auch Polyaldehyde, wie Glyoxal, oder Haloepoxyverbindungen, wie Epichlorhydrin, verwendbar. Diese Quervernetzungsmittel werden zweckmäßigerweise in wäßriger oder organischer Lösung zugegeben. Die Nachvernetzung erfolgt durch Erhitzen auf 50 bis 100 °C, wobei vorzugsweise auf 60 bis 80 °C erwärmt wird. Die Vernetzungsreaktion wird nach 0,5 bis 4 Stunden beendet.

Nach der Vernetzung fallen die Stärke-Pfropfpolymere in Form pulverförmiger, poröser, aus feinstteiligen Primärteilchen zusammengesetzten Körnern mit guter Rieselfähigkeit an. Die Körner können leicht von der kontinuierlichen, organischen Phase, beispielsweise durch Filtrieren oder Zentrifugieren, getrennt werden. Anschließend können sie nach üblichen Verfahren, beispielsweise unter Vakuum oder unter

Anwendung eines Wirbelschicht-, Taumel- oder Schaufel-Trockners, zu pulverförmigem Produkt getrocknet werden. Das Filtrat kann in der nächsten Polymerisationscharge wiederverwendet werden. Lösemittel und Wasser lassen sich auch destillativ vom Polymerpulver abtrennen.

Die Polymerisation führt zu einem einheitlich feinen Produkt mit einer engen Korngrößenverteilung und einer hohen Saugkraft für Wasser- und Körperflüssigkeiten.

Als feinteilig werden im Sinne dieser Erfindung Produkte mit Korngrößen unter 2 mm verstanden, wobei über 85 Gewichtsprozent der Produkte Korngrößen unter 1 000 µm aufweisen sollen.

Die Bildung von grobteiligen Agglomeraten und Anbackungen ist sehr gering.

Die Produkte eignen sich in besonderem Maße zur Einarbeitung in zellstoffhaltige, saugfähige Hygieneartikel, wie Wegwerfwindeln, Damenbinden, Wischtüchern und Krankenunterlagen. Sie können als Trockenmittel, als Quellmittel in Dichtungsmassen, als Eindickmittel sowie als Wasserspeicher oder Feuchthaltemittel in der Landwirtschaft verwendet werden.

Da die zudosierten ungesättigten Monomere sofort polymerisiert werden, kann die Wärmeentwicklung bei der Polymerisation sehr gut kontrolliert und beherrscht werden. Bei kontinuierlicher Zugabe wird stetig Wärme entwickelt, die gut abgeführt werden kann. Temperaturspitzen treten nicht auf.

Durch Zugabe der erfindungsgemäßen zusätzlichen Dispergiermittel wird die Viskosität der inversen Suspension spontan auf das Niveau zu Beginn der Polymerisation erniedrigt. Die Durchmischung wird deutlich verbessert, und Verbackungen der gequollenen Polymerteilchen während der azeotropen Teilentwässerung werden verhindert.

Die erfindungsgemäß eingesetzten amphoteren Ammoniumverbindungen und quaternären Imidazoliniumsalze sind toxikologisch unbedenklich. Sie sind in hohem Maße hautverträglich. Sie sind Rohstoffe für nicht haut- und augenreizende Babyshampoos, und sie wirken schwach antibakteriell. Aus diesen Gründen sind sie besonders geeignet für eine Verwendung bei der Herstellung von quellfähigen Polymeren für saugfähige Hygieneartikel.

Das Verfahren wird allgemein so durchgeführt, daß man in einem Rührkessel das Polysaccharid in dem organischen Lösemittel unter Rühren dispergiert und auf die gewünschte Polymerisationstemperatur erwärmt. Anschließend wird eine wäßrige Lösung mit der ungesättigten Carbonsäure und dem Polymerisationsinitiator zudosiert, wobei eine Polymerisation mit Pfropfung stattfindet. Nach der Polymerisation wird durch azeotrope Destillation am Wasserabscheider teilentwässert. Man führt dann eine Nachvernetzung durch und kann danach das Polymer als feinteiliges Produkt abtrennen.

Für die Beispiele, die die Erfindung verdeutlichen sollen, werden folgende Bestimmungen durchgeführt:

## Flüssigkeitsrückhaltevermögen

In einem 100-ml-Zentrifugenglas werden 0,050 g Polymer mit 70 ml destilliertem Wasser oder 0,500 g Polymer mit 70 ml synthetischem Urin (Mischung aus 3 883 g destilliertem Wasser, 33,2 g NaCl, 4,0 g $MgSO_4 \cdot 7H_2O$, 2,4 g $CaCl_2$ und 77,6 g Harnstoff) versetzt und eine Stunde unter schwachem Rühren gequollen. Danach wird die Gelphase 0,5 Stunden bei 4 500 UpM von der Solphase abzentrifugiert und gewogen.

$$\text{Absorptionsvermögen} = \frac{\text{Gelauswaage - Einwaage}}{\text{Einwaage}} \quad (g/g)$$

## Saugkraft

0,050 g Polymer (bei Verwendung von destilliertem Wasser) oder 0,100 g Polymer (bei Verwendung von synthetischem Urin) werden auf eine Glasfritte (Typ G3, Durchmesser 3 cm) gestreut, die mit einer flüssigkeitsgefüllten Bürette verbunden und auf das Niveau der Glasfritte nivelliert ist. Die absorbierte Flüssigkeitsmenge wird nach 0,5 und 5 Minuten an der Bürette gemessen.

$$\text{Saugkraft} = \frac{\text{absorbierte Flüssigkeitsmenge}}{\text{Einwaage}} \quad (g/g)$$

Die in den Beispielen angegebenen Ausbeuten in g beziehen sich stets auf Produkte, die 24 Stunden bei 50 °C im Vakuumtrockenschrank (15 mbar Vakuum) bis zu einem Restfeuchtegehalt von 7 Gewichtsprozent getrocknet wurden. Die angegebenen Viskositäten beziehen sich auf 10%ige wäßrige Pasten bei 20 °C.

Vergleichsbeispiel A

In einem 1 200 l fassenden Polymerisationskessel aus V4A-Stahl, der mit einem zweiflügligen Intermig-Rührer, Rührerleistungsschreiber mit einem Meßbereich von 0 bis 10 kW, Rückflußkühler, Wasserauskreiser und Zulaufeinrichtungen ausgestattet ist, wird eine Suspension aus

| | |
|---|---|
| 660 kg | Cyclohexan |
| 23 kg | einer dünnkochenden Stärke mit einer Viskositätszahl von 127 mPa s (AMISOL[R] 05515 der Fa. Cerestar, D-4150 Krefeld) |
| 5,3 kg | Sorbitanmonolaurat |
| 1,5 kg | Polyethylenglykol mit einer Molmasse von 1 550 (POLYDIOL 1550 der Fa. Hüls AG, D-4370 Marl) |
| 23 g | Ethylendiamintetraacetat, gelöst in 1 l Wasser und |
| 38 g | Ammoniumpersulfat, gelöst in 1 l Wasser |

vorgelegt. Der Kesselinhalt wird unter Rühren auf 68 °C aufgeheizt und mit Stickstoff gespült. Innerhalb einer Stunde fügt man dazu eine Monomerlösung, die man durch Neutralisieren von 95 kg Acrylsäure mit 147 kg 25%iger Natronlauge und Zusatz von 38 g Ethylenglykoldiglycidylether erhält, und mit getrennter Dosierung eine Initiatorlösung von 152 g Ammoniumpersulfat in 4,5 l Wasser hinzu.

Nachdem die gesamte Monomer- und Initiatorlösung unter ständigem Rühren des Reaktionsgemisches mit 100 UpM zugegeben ist, wird noch eine halbe Stunde bei 70 °C nachgerührt. Die Rührerleistung steigt von 2 kW zu Beginn des Monomerzulaufs auf 3,5 kW nach dem Ende des Monomerzulaufs. Das Reaktionsgemisch hat eine sämige Konsistenz und wird unvollständig durchmischt. Dann werden 95 kg Wasser azeotrop bei 600 mbar abdestilliert, wobei die Rührerleistungsaufnahme auf 2 kW (Anfangswert) abfällt. Dann werden 76 g Ethylenglykoldiglycidylether, gelöst in 1,7 l Wasser, zugesetzt. Man rührt noch 2 Stunden nach. Das Polymer wird dann vom Cyclohexan abfiltriert und bei 60 °C im Schaufeltrockner auf einen Restfeuchtegehalt von weniger als 5 % getrocknet. Man erhält 136 kg überwiegend feinteiliges Stärke-Pfropfpolymer.

Vergleichsbeispiel B

Es wird wie im Vergleichsbeispiel A verfahren. Unmittelbar nach der Monomer- und Initiatordosierung wird jedoch bei einer Rührerleistungsaufnahme von 2,4 kW eine Lösung von 1-kg Sorbitanmonolaurat in 2 kg Cyclohexan zugesetzt. Die Rührerleistung wird nicht gesenkt und die Durchmischung des Reaktorinhalts nicht verbessert.

Beispiel 1

Es wird wie im Vergleichsbeispiel A verfahren. Unmittelbar nach der Monomer- und Initiatordosierung werden jedoch 3,5 l einer handelsüblichen, 30%igen wäßrigen Lösung eines N-Alkylamidopropylbetains (SERVO-AMFOLYT JB 130, Fa. Servo, NL-7490 Delden) zugesetzt. Durch dieses zusätzliche Dispergiermittel erfolgt ein spontaner Abfall der Rührerleistung auf 2 kW, die auch während der azeotropen Entwässerung konstant niedrig bleibt. Die visuelle Beobachtung des Reaktorinhalts zeigt eine deutliche Verbesserung der Durchmischung.

Beispiel 2

In dem im Vergleichsbeispiel A beschriebenen Polymerisationskessel werden

| | |
|---|---|
| 450 kg | Cyclohexan, |
| 23 kg | einer nativen Maisstärke (Typ Cerestar GL 03402 der Fa. Cerestar, D-4150 Krefeld), |
| 1,5 kg | Sorbitanmonolaurat (SPAN[R] 20 der Fa. Atlas, Wilmington, Del., USA), |
| 1,0 kg | Polyethylenglykol mit einer Molmasse von 1 550, |
| 23 g | Ethylendiamintetraacetat, gelöst in 1 l Wasser, und |
| 38 g | Ammoniumpersulfat, gelöst in 1 l Wasser, |

vorgelegt. Der Kesselinhalt wird unter Rühren auf 70 °C aufgeheizt und mit Stickstoff gespült. Innerhalb

einer Stunde wird eine Monomerlösung, die durch Neutralisieren von 95 kg Acrylsäure mit 147 kg 25%iger Natronlauge und Zusatz von 62 g Ethylenglykoldiglycidylether erhalten wird, sowie eine Initiatorlösung aus 152 g Ammoniumpersulfat in 4,5 l Wasser zudosiert. Nach 75%iger Dosierung wird bei einer Rührerleistungsaufnahme von 2 kW 1 l des in Beispiel 1 verwendeten zusätzlichen Dispergiermittels zugesetzt. Bei der weiteren Monomerdosierung erfolgt kein weiterer Anstieg der Rührerleistung. Die Durchmischung bleibt unverändert gut. Es werden 95 kg Wasser bei einem auf 600 mbar verminderten Druck azeotrop abdestilliert. Das Polymer wird bei 60 °C im Schaufeltrockner auf einen Restfeuchtegehalt von 5 % getrocknet. Man erhält 136 kg feinteiliges, grobkornfreies Stärke-Pfropfpolymer.

Beispiel 3

Es wird hinsichtlich Art und Menge der Einsatzstoffe wie im Beispiel 1 verfahren, jedoch unmittelbar nach 100%iger Monomer- und Aktivatordosierung 3 l einer handelsüblichen, 40%igen Lösung von Kokosimidazolin (SERVO-AMFOLYT JA 140 der Fa. Servo) zugesetzt. Die Rührerleistung fällt spontan von 2,4 kW auf 2 kW ab und ändert sich während der azeotropen Entwässerung nicht. Die visuell beobachtete Durchmischung des Reaktorinhalts wird deutlich verbessert.

Beispiel 4

Es werden die Einsatzstoffe nach Art und Menge wie im Beispiel 1 im Polymerisationsreaktor vorgelegt. Dann wird unter Rühren auf 70 °C aufgeheizt und mit Stickstoff gespült. Innerhalb einer Stunde wird eine Monomerlösung, die durch Neutralisieren von 95 kg Acrylsäure mit 147 kg 25%iger Natronlauge und Zusatz von 30 g Pentaerythrittriacrylat erhalten wird, sowie eine Initiatorlösung aus 80 g Kaliumpersulfat in 4,5 l Wasser zudosiert. Während des Monomerzulaufs steigt die Rührerleistung von 2 auf 2,4 kW.

Nach der Monomerdosierung werden 3 l einer Aufschlämmung von 1,2 kg eines unter Verwendung von $C_{16}$-$C_{18}$-Talgfettsäure hergestellten 1-Methyl-2-alkyl-3-alkylamidoethylimidazoliniumsalzes (MARLOSOFT IQ 75 der Fa. Hüls AG) in 1,8 l Cyclohexan zugesetzt. Die Rührerleistung fällt auf 2 kW und ändert sich während der azeotropen Entwässerung nicht. Die Reaktordurchmischung wird deutlich verbessert. Es werden 95 kg Wasser bei einem auf 600 mbar verminderten Druck abdestilliert. Dann werden 70 g Ethylenglykoldiglycidylether, gelöst in 1,7 l Wasser, zugesetzt. 2 Stunden wird nachgerührt. Dann wird das Polymer vom Cyclohexan abfiltriert und im Schaufeltrockner getrocknet. Man erhält 135 kg feinteiliges Produkt ohne Grob- und Feinstanteile.

In der folgenden Tabelle 1 sind die Korngrößenverteilungen und die Wasserabsorptionswerte der Produkte zusammengestellt.

Tabelle 1

| Bsp. | Siebanalyse | | | Absorptionsvermögen (g/g) | | Saugkraft (g/g) | | | |
|---|---|---|---|---|---|---|---|---|---|
| | Grobkorn | Nutzfraktion | | Wasser | synth. Urin | Wasser nach | | synth. Urin nach | |
| | > 800 µ | 500 - 800 µ | 90 - 500 µ | | | 0,5 min | 5 min | 0,5 min | 5 min |
| A | 13 | 31 | 56 | 280 | 34 | 66 | 120 | 14 | 20 |
| B | 7 | 54 | 39 | 250 | 33 | 30 | 104 | 9 | 18 |
| 1 | 2 | 12 | 86 | 290 | 35 | 90 | 140 | 17 | 23 |
| 2 | 0 | 19 | 81 | 210 | 31 | 116 | 190 | 20 | 25 |
| 3 | 2 | 33 | 65 | 350 | 40 | 32 | 90 | 10 | 18 |
| 4 | 0 | 61 | 39 | 320 | 38 | 54 | 122 | 12 | 19 |

## Patentansprüche

1. Verfahren zur Herstellung feinteiliger, poröser und schnell wasserquellbarer Polysaccharid-Pfropfpolymerer durch halbkontinuierliche Umkehrphasen-Suspensionspolymerisation, Teilentwässerung und Vernetzung, wobei man bei der Suspensionspolymerisation
   - zu einer Suspension von 5 bis 40 Teilen Polysaccharid und 0 bis 2 Teilen Polymerisationsinitiator in einem unpolaren organischen Lösemittel, das eine Dispergiermittelmischung aus
   (a) 50 bis 100 Gewichtsprozent nichtionischem Tensid mit einem Hydrophil-Lipophil-Gleichgewicht von 0,5 bis 10 und

(b) 0 bis 50 Gewichtsprozent nichtionischem Tensid mit einem Hydrophil-Lipophil-Gleichgewicht von 10,5 bis 20 enthält,

- eine wäßrige Lösung, die
  60 bis 95 Teile einer zu 50 bis 100 % neutralisierten, olefinisch ungesättigten Carbonsäure,
  0 bis 50 Teile weitere, olefinisch ungesättigte Monomere,
  0 bis 2 Teile Quervernetzungsmittel und
  0,005 bis 5 Teile Polymerisationsinitiator enthält,

bei 40 bis 100 °C in 0,5 bis 5 Stunden kontinuierlich zugibt,
dadurch gekennzeichnet,
daß man nach Zugabe von 75 bis 100 % der wäßrigen Lösung als zusätzliches Dispergiermittel eine amphotere Ammoniumverbindung mit einem Alkylrest mit 6 bis 20 C-Atomen, ein quaternäres Imidazoliniumsalz mit einem Alkylrest mit 6 bis 20 C-Atomen oder Mischungen davon zugibt.

**2.** Verfahren nach Anspruch 1,
dadurch gekennzeichnet,
daß man eine amphotere Ammoniumverbindung der Struktur I

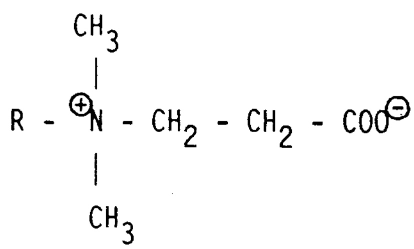

(I)

oder der Struktur II

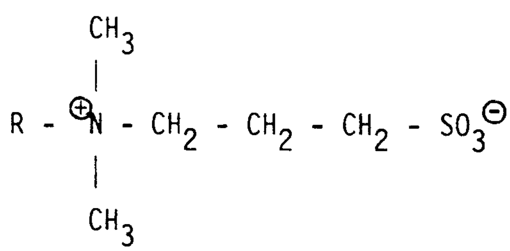

(II),

wobei R jeweils ein Alkylrest mit 6 bis 20 C-Atomen ist, einsetzt.

**3.** Verfahren nach Anspruch 1,
dadurch gekennzeichnet,
daß man ein quaternäres Imidazoliniumsalz mit Betainstruktur III

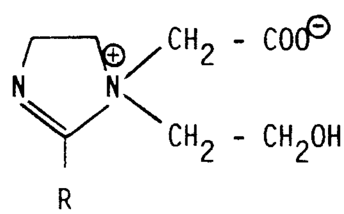

(III),

wobei R ein Alkylrest mit 6 bis 20 C-Atomen ist, verwendet.

4. Verfahren nach Anspruch 1, dadurch gekennzeichnet, daß man ein quaternäres Imidazoliniumsalz der Struktur IV

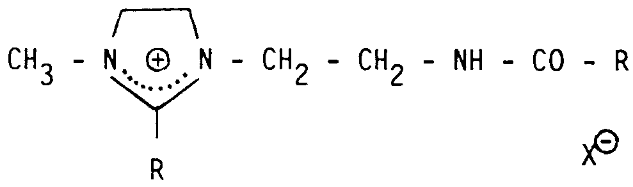

(IV),

worin R ein Alkyl mit 6 bis 20 C-Atomen ist, zugibt.

5. Verfahren nach Anspruch 4, dadurch gekennzeichnet, daß das Anion $X^{\ominus}$ das Methylsulfat-Anion ist.

6. Verfahren nach Anspruch 1, dadurch gekennzeichnet, daß man das zusätzliche Dispergiermittel in einer Menge von 0,2 bis 4 %, bezogen auf die olefinisch ungesättigte Carbonsäure, zusetzt.

7. Verfahren nach Anspruch 6, dadurch gekennzeichnet, daß 0,4 bis 2 % zusätzliches Dispergiermittel zugegeben werden.

8. Verfahren nach Anspruch 1, dadurch gekennzeichnet, daß als Polysaccharid eine Stärke suspendiert wird.

9. Verfahren nach Anspruch 8, dadurch gekennzeichnet, daß 10 bis 25 Teile Stärke suspendiert werden.

Europäisches Patentamt

# EUROPÄISCHER RECHERCHENBERICHT

Nummer der Anmeldung

EP 91114800.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| A | DE - A - 3 613 309 (HÜLS AG) * Ansprüche 1-3,5,6 * -- | 1,8,9 | C 08 F 251/00<br>C 08 F 2/32 |
| A | US - A - 4 506 062 (FLESHER et al.) * Ansprüche 1,3 * ---- | 1 | |

RECHERCHIERTE SACHGEBIETE (Int. Cl 5)

C 08 F 2/00
C 08 F 251/00
C 08 F 291/00

Der vorliegende Recherchenbericht wurde für alle Patentansprüche erstellt.

| Recherchenort | Abschlußdatum der Recherche | Prüfer |
|---|---|---|
| WIEN | 29-01-1992 | PUSTERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82